# EUROPÄISCHE PATENTSCHRIFT

(11) **EP 1 992 436 B1**
(45) Veröffentlichungstag und Bekanntmachung des Hinweises auf die Patenterteilung: **16.09.2009**
(21) Anmeldenummer: 07009683.9
(22) Anmeldetag: 15.05.2007
(51) Int. Cl.: B23B 31/26, B23Q 5/32

(54) **Motorbetriebene Arbeits-Spindel für eine Werkzeug-Maschine**
Motor-driven working spindle for a machine tool
Broche principale motorisée pour une machine-outil

(43) Veröffentlichungstag der Anmeldung: 19.11.2008
(73) Patentinhaber: Hüller Hille GmbH, 74821 Mosbach (DE)
(72) Erfinder: Späth, Günther, 70806 Kornwestheim (DE)
(74) Vertreter: Rau, Manfred

(56) Entgegenhaltungen:
- DE-A1- 19 629 991
- DE-B3- 10 316 244
- DE-U1- 29 919 604
- US-A1- 2005 236 169

## Beschreibung

Die Erfindung betrifft eine motorbetriebene Arbeits-Spindel für eine Werkzeug-Maschine nach dem Oberbegriff des Anspruches 1.

Bei einer derartigen aus der US 2005/0236169 A1 bekannten motorbetriebenen Arbeits-Spindel für eine Werkzeug-Maschine ist das die Welle und deren Spindel-Dreh-Antrieb aufnehmende Gehäuse auf Führungssäulen verschiebbar angeordnet. Der Vorschub-Antrieb des gesamten Gehäuses erfolgt über einen Antrieb, der ortsfest mit den das Gehäuse tragenden und führenden Säulen verbunden ist. Der Spindel-Vorschub erfolgt durch Verschiebung des gesamten Gehäuses, in dem die Spindel axial und verschiebbar gelagert ist. Die Vorschub-Bewegung des Gehäuses wird vom Motor mittels eines Spindel-Mutter-Triebs erzeugt. An der Stirnseite der Welle befindet sich eine Werkzeug-Aufnahme, in der mittels einer Werkzeug-Spann-Einrichtung ein Bearbeitungs-Werkzeug aufgenommen werden kann. Zur automatischen Betätigung der Werkzeug-Spann-Einrichtung sind im vorderen Bereich der Welle Spann-Backen angeordnet, die ein Werkzeug aufnehmen. Die Betätigung der Spann-Backen erfolgt mittels einer Zug-Stange, wobei das Spannen des Werkzeugs über mehrere TellerFedern erfolgt, die zwischen der Welle und der Zug-Stange wirken. Zum Lösen der Spann-Einrichtung wird die Zug-Stange hydraulisch gegen die Kraft der Federn verschoben. Die Arbeits-Spindel kann in Richtung ihrer Achse um ein verhältnismäßig großes Maß verschoben werden.

Aus der DE 196 29 991 A1 bekannte Arbeits-Spindeln weisen eine in einem Gehäuse drehbar gelagerte Welle auf. An der Stirnseite der Welle befindet sich in der Regel eine Werkzeug-Aufnahme, in der mittels einer Werkzeug-Spann-Einrichtung ein Bearbeitungs-Werkzeug aufgenommen werden kann. Die Werkzeug-Spann-Einrichtung kann manuell betätigt werden; in der Regel erfolgt die Betätigung aber automatisch. Bei derartigen automatischen Werkzeug-Spann-Einrichtungen sind im vorderen Bereich der Welle Spann-Backen angeordnet, die ein Werkzeug aufnehmen. Die Betätigung der Spann-Backen erfolgt mittels einer Zug-Stange, wobei das Spannen des Werkzeugs über eine oder mehrere Federn erfolgt, die zwischen der Welle und der Zug-Stange wirken. Zum Lösen der Spann-Einrichtung wird die Zug-Stange hydraulisch gegen die Kraft der Feder verschoben.

Je nach Funktion der Werkzeug-Maschine kann die Arbeits-Spindel jede vorgegebene Position im Arbeitsraum einer Werkzeug-Maschine erreichen. Hierzu ist es üblich, dass die Arbeits-Spindel in einem Spindel-Schlitten eingebaut ist, der in drei Koordinatenrichtungen, also auch parallel zur Mittel-Längs-Achse der Welle verschoben werden kann. Die Arbeits-Spindel ist zusammen mit dem sie tragenden Schlitten verhältnismäßig schwer.

Es ist weiterhin bekannt, die Arbeits-Spindel nur in zwei Achsrichtungen, nämlich in einer zur Mittel-Längs-Achse der Welle senkrechten Ebene verschiebbar auszugestalten. Die Verschiebung in Richtung der Mittel-Längs-Achse erfolgt durch Verschiebung des zu bearbeitenden Werkstücks in diese Richtung. Das Werkstück ist hierzu auf einem in Richtung der Mittel-Längs-Achse der Welle verschiebbaren Werkstück-Schlitten aufgespannt. Nachteilig hieran ist, dass der Werkstück-Schlitten zusammen mit dem Werkstück ein außerordentlich schweres System ist, das für jeden Bearbeitungsvorgang verschoben werden muss, was Zeit und Energie kostet.

Der Erfindung liegt die Aufgabe zugrunde, eine Arbeits-Spindel so auszugestalten, dass sie für kurze Arbeitshübe sehr leicht und trotzdem stabil ausgebildet ist.

Diese Aufgabe wird erfindungsgemäß durch die Merkmale im Kennzeichnungsteil des Anspruches 1 gelöst. Der Kern der Erfindung liegt darin, dass die die Aufnahme, in der Regel also die Werkzeug-Aufnahme, tragende Welle selber mittels eines Spindel-Vorschub-Antriebs verschiebbar im Gehäuse der in der Regel eine Werkzeug-Spindel bildenden Arbeits-Spindel angeordnet ist und wobei gattungsgemäß auch der Spindel-Dreh-Antrieb in diesem Gehäuse angeordnet ist. Die gesamte Einheit ist sehr kompakt und leicht. Nur ein Teil der Antriebe muss mit der Welle verschiebbar ausgebildet sein. Die jeweils im Gehäuse fest angeordneten Teile sind unverschiebbar.

Zahlreiche vorteilhafte Ausgestaltungen ergeben sich aus den Unteransprüchen.

Weitere Merkmale, Vorteile und Einzelheiten der Erfindung ergeben sich aus der nachfolgenden Beschreibung von Ausführungsbeispielen anhand der Zeichnung. Es zeigt
- Fig. 1a: den vorderen Teil einer Werkzeug-Spindel nach der Erfindung,
- Fig. 1b: den hinteren Teil der Werkzeug-Spindel,
- Fig. 2: eine schematische Darstellung der Werkzeug-Spindel mit zurückgezogener Welle, und
- Fig. 3: eine Fig. 2 entsprechende schematische Darstellung der Werkzeug-Spindel mit ausgeschobener Welle.

Die in der Zeichnung dargestellte Arbeitsspindel ist eine motorbetriebene Werkzeug-Spindel 1, die ein Gehäuse 2 aufweist, in dem eine Welle 3 angeordnet und um eine Mittel-Längs-Achse 4 drehantreibbar gelagert ist. Die Welle 3 ist an ihrem vorderen Ende 5 mittels zweier Wälz-Lager 6, 7 in einer Schiebe-Hülse 8 gelagert, die axial verschiebbar im Gehäuse 2 abgestützt ist. Die Schiebe-Hülse 8 ist wie ein Gleitlager im Gehäuse 2 verschiebbar geführt. Selbstverständlich kann die Abstützung und Führung der Hülse 8 im Gehäuse 2 auch mittels eines üblichen Führungselements, zum Beispiei einer Kugelhülse, erfolgen.

An der Stirnseite der Welle 3, also an deren vorderem Ende 5, ist eine Werkzeug-Aufnahme 9 angeordnet, in der mittels einer Werkzeug-Spann-Einrichtung 10 ein Werkzeug 11 fest eingespannt werden kann. Die Spann-Einrichtung 10 weist Spann-Backen 12 auf, die mittels eines SpannBolzens 12a gespreizt werden können. Der Spann-Bolzen 12a ist mittels einer die Welle 3 koaxial durchsetzenden Zug-Stange 13 betätigbar. Derartige Spann-Einrichtungen 10 sind in der Praxis allgemein üblich und beispielsweise aus der DE 196 29 991 A1 bekannt. Üblicherweise wird eine derartige Zug-Stange 13 durch eine vorgespannte Feder von der Werkzeug-Aufnahme 9 weg belastet, wodurch das Werkzeug 11 fest von den Spann-Backen 12 in der Werkzeug-Aufnahme 9 gehalten wird. Zum Lösen der Spann-Backen 12 zum Zwecke eine Werkzeug-Wechsels wird die Zug-Stange 13 in entgegen gesetzter Richtung, also zur Werkzeug-Aufnahme 9 hin verschoben, wodurch über den Spann-Bolzen 12a die Spann-Backen 12 geöffnet und das Werkzeug 11 herausgenommen werden kann.

Im Gehäuse 2 ist weiterhin ein Spindel-Dreh-Antrieb 14 angeordnet, bei dem es sich um einen Elektromotor handelt. Dessen Stator 15 ist axial und tangential fest, also drehfest, im Gehäuse 2 angebracht. Zwischen den Wickelköpfen 16 des Stators 15 ist das Stator-Blechpaket 17 angeordnet. Auf der Welle 3 ist der Rotor 18 des Antriebs 14 drehfest angebracht. Dessen Rotor-Blechpaket 19 hat eine Länge a, während das Stator-Blechpaket 17 eine Länge b in Richtung der Achse 4 aufweist. Es gilt a > b, wobei weiterhin a - b etwa dem maximalen Arbeitshub der Welle 3 in Richtung der Achse 4 gegenüber dem Gehäuse 2 entspricht. Aufgrund dieser Ausgestaltung ist die Arbeitsleistung der Welle 3, also der Werkzeug-Spindel 1, bei jeder möglichen axialen Stellung der Welle 3 relativ zum Gehäuse 2 etwa gleich.

Hinter dem Spindel-Dreh-Antrieb 14 ist ein Spindel-Vorschub-Antrieb 20 im Gehäuse 2 vorgesehen. Der Spindel-Vorschub-Antrieb 20 ist als sogenannter Torque-Motor ausgebildet. Sein Stator 21 ist axial und tangential fest, also unverschiebbar und drehfest, im Gehäuse 2 eingebaut. Sein Rotor 22 ist fest mit einer in ihm angeordneten Kugel-Gewinde-Mutter 23 verbunden, die mittels Wälzlagern 24, 25 drehbar, aber axial unverschiebbar im Gehäuse 2 gelagert ist. In der Kugel-Gewinde-Mutter 23 ist wiederum eine Kugel-Gewinde-Hülse 26 angeordnet, die gegenüber dem Gehäuse 2 in Richtung der Achse 4 verschiebbar, aber unverdrehbar gelagert ist. In tangentialer Richtung ist sie durch ein Führungs-Element 27 gehalten, das nach Art einer Feder-Nut-Verbindung ausgebildet sein kann. Dieses Führungs-Element 27 lässt Verschiebungen der Hülse 26 in Richtung der Achse 4 gegenüber dem Gehäuse 2 zu. Die Kugel-Gewinde-Hülse 26 ist über Wälz-Lager 28 gegenüber der Welle 3 drehbar, aber unverschiebbar abgestützt, wobei die Außen-Ringe 29 der Wälz-Lager 28 in der Kugel-Gewinde-Hülse 26 befestigt sind, während die Innen-Ringe 30 auf der Welle 3 befestigt sind. Bei einer vom Spindel-Vorschub-Antrieb 20 verursachten Drehung der Kugel-Gewinde-Mutter 23 wird die Kugel-Gewinde-Hülse 26 mit der Welle 3 in Richtung der Achse 4 verschoben. Die Welle 3 ist dagegen in der Kugel-Gewinde-Hülse 26 frei drehbar.

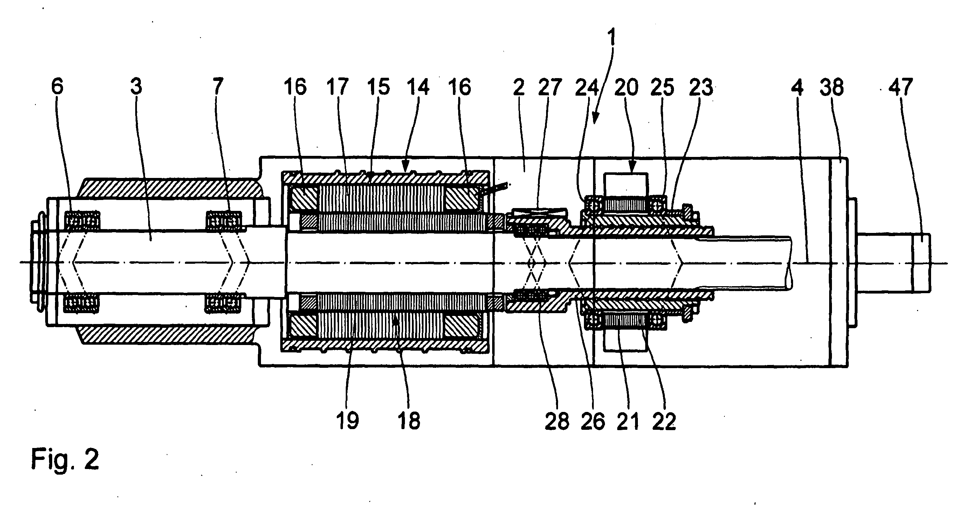

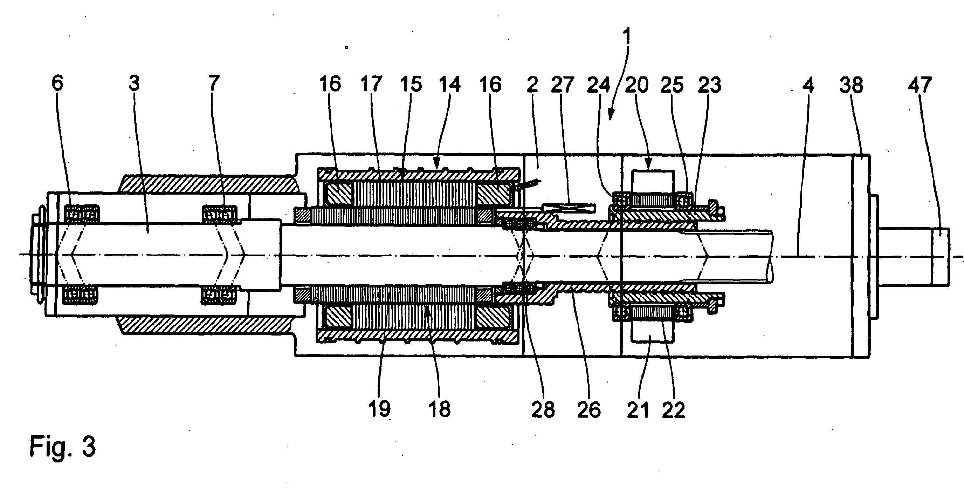

In Fig. 2 ist die weitest in das Gehäuse 2 zurückgezogene Position der Welle 3 dargestellt, während in Fig. 3 die weitest mögliche ausgefahrene Position dargestellt ist. Für diesen maximalen Arbeitshub cₘₐₓ gilt: cₘₐₓ ≈ a - b.

Weiterhin ist eine Axial-Vorschub-Mess-Einrichtung 31 vorgesehen, die ein drehfest mit der Kugel-Gewinde-Mutter 23 verbundenes Mess-Rad 32 und einen ortsfest im Gehäuse 2 angebrachten induktiv arbeitenden Mess-Aufnehmer 33 aufweist. Bei einer Umdrehung des Mess-Rades 32 gegenüber dem Mess-Aufnehmer 33 werden beispielsweise 256 Signale bzw. Impulse ausgelöst. Da die Kugel-Gewinde-Hülse 26 mit der Welle 3 bei einer Umdrehung der Kugel-Gewinde-Mutter 23 um ein Maß d in Richtung der Achse 4 verschoben wird, das der Steigung des Gewindes 34 von Mutter 23 und Hülse 26 entspricht, kann der jeweils zurückgelegte Vorschub der Welle 3 und damit des Werkzeuges 11 und dessen Position relativ zu der in Fig. 2 dargestellten zurückgezogenen Position sehr exakt bestimmt werden. Die Verarbeitung der von der Einrichtung 31 abgegebenen Signale erfolgt in einer nicht dargestellten zentralen Steuerung der Werkzeugmaschine.

Weiterhin ist eine Rotations-Mess-Einrichtung 35 vorgesehen, mittels derer die Drehbewegung der Welle 3 erfasst wird. Sie weist ein sich mit der Welle 3 drehendes Mess-Rad 36 und einen ortsfest im Gehäuse 2 angeordneten Mess-Aufnehmer 37 auf. Damit sich bei Axialverschiebungen der Welle 3 aufgrund eines entsprechenden Antriebs des Spindel-Vorschub-Antriebs 20 die Lage von Mess-Rad 36 zu Mess-Aufnehmer 37 nicht ändert, ist der Mess-Aufnehmer 37 an einem hülsenförmigen Einsatz 38 angebracht, der an dem hinteren Ende 39 des Gehäuses 2 befestigt ist. Das Mess-Rad 36 ist an einer die Welle 3 umgebenden topfförmigen Hülse 40 angebracht, die über Wälz-Lager 41, 42 in dem Einsatz 38 frei drehbar, aber in Richtung der Achse 4 unverschiebbar gelagert ist. Sie ist mit der Welle 3 mittels einer Schiebe-Verbindung 43, beispielsweise einer Längsverzahnung oder dergleichen verbunden, so dass die Welle 3 gegenüber der Hülse 40 axial verschiebbar ist. Die Verarbeitung der in der Rotations-Mess-Einrichtung 35 erzeugten Signale erfolgt in grundsätzlich gleicher Weise wie für die Axial-Vorschub-Mess-Einrichtung 31. Die Mess-Einrichtungen 31, 35 sind in ihrer grundsätzlichen Funktion auf anderen Gebieten der Technik bekannt.

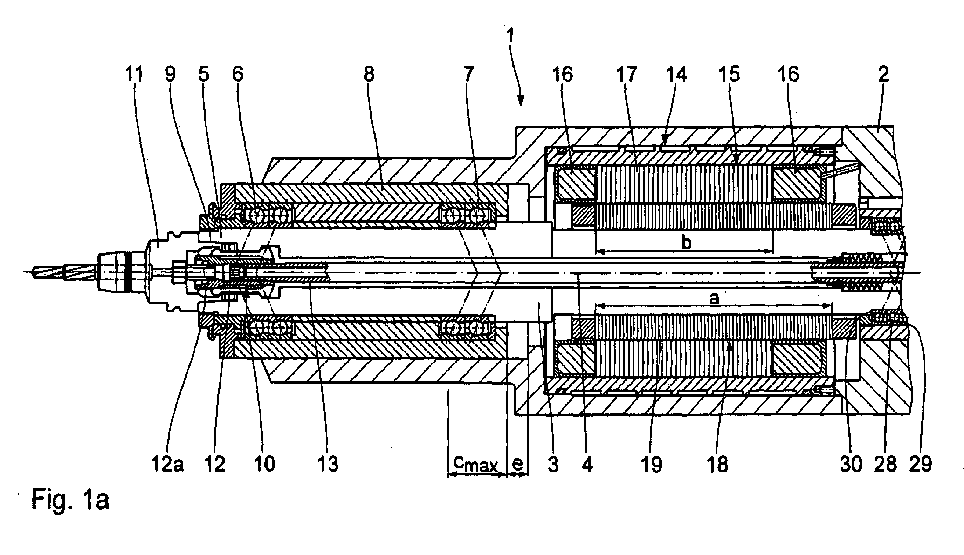

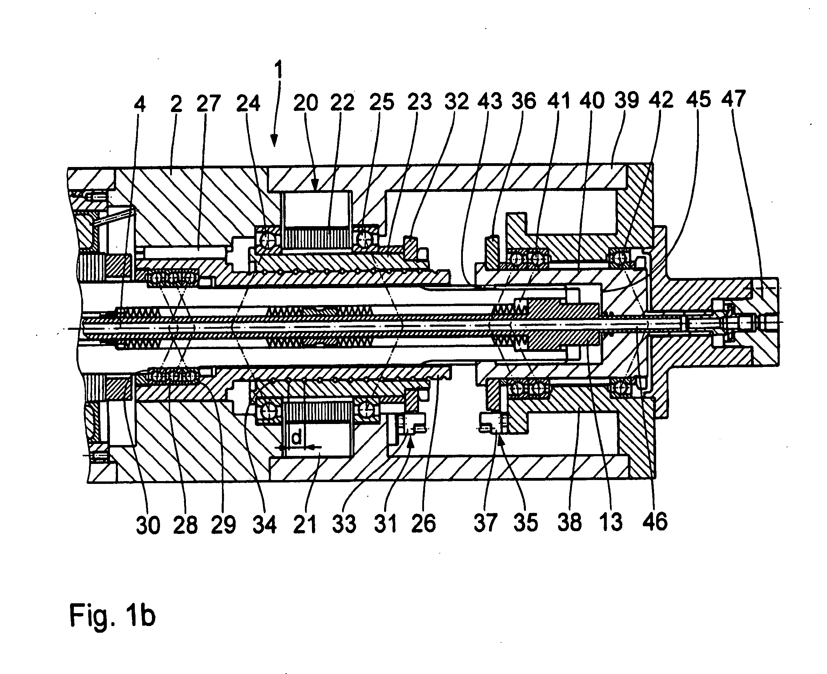

Wie bereits erwähnt, wird die Zug-Stange 13 mittels einer vorgespannten Feder bzw. eines Federpakets 44 vom vorderen Ende 5 der Welle 3 hin zum hinteren Ende 39 hingezogen bzw. gespannt, wodurch die Werkzeug-Spann-Einrichtung 10 geschlossen wird. Das Feder-Paket 44 stützt sich einerseits gegen die Welle 3 und andererseits gegen die Zug-Stange 13 ab. Zum Lösen der Werkzeug-Spann-Einrichtung 10 kann anstelle eines sonst üblichen Hydraulikzylinders, Pneumatikzylinders oder einer anderen mechanischen Betätigungseinheit der Spindel-Vorschub-Antrieb 20 verwendet werden. Hierbei wird die Welle 3 mit der Zug-Stange 13 soweit in Richtung zum hinteren Ende 39 des Gehäuses 2 um einen in Fig. 1a angedeuteten Lösehub e verschoben, bis die mit der Welle 3 verschobene Zug-Stange 13 am Boden 45 der Hülse 40 anschlägt, die in Richtung der Achse 4 unverschiebbar im Gehäuse 2 gehalten ist. Beim Anschlag der Zug-Stange 13 an dem Boden 45 wird die Zug-Stange 13 in Richtung der Achse 4 festgehalten, während die Welle 3 noch weiter in Richtung zum Boden 45 der topfförmigen Hülse 40 bewegt wird. Die Zug-Stange 13 wird also relativ zur Welle 3 zu deren vorderen Ende 5 hin verschoben, wodurch die Spann-Backen 12 der Werkzeug-Spann-Einrichtung 10 geöffnet werden, so dass das Werkzeug 11 entnommen werden kann. Diese Art des Öffnens der Werkzeug-Aufnahme 9 erfordert allerdings besondere Maßnahmen an die Handhabung des Werkzeugs 11, da während des Lösevorgangs das Werkzeug eine Axialbewegung durchführt. Durch Messung der Ströme im Spindel-Vorschub-Antrieb 20 kann der Lösevorgang überwacht werden. Dadurch entsteht auch die Möglichkeit, auf eine zusätzliche Überwachung der Werkzeug-Spannung zu verzichten, d. h. hierüber kann auch kontrolliert werden, ob das Werkzeug 11 ordnungsgemäß in der Spann-Einrichtung 10 gehalten ist.

Zur Vervollständigung sei darauf hingewiesen, dass die Zug-Stange 13 in üblicher Weise hohl ausgebildet ist, also einen Innen-Kanal 46 aufweist, durch den Kühl-Schmier-Mittel in Richtung zur Werkzeug-Aufnahme 11 gefördert wird. Hierzu ist am hinteren Ende 39 des Gehäuses 2 eine Dreh-Zuführung 47 vorgesehen, durch die dem Innen-Kanal 46 das Kühl-Schmier-Mittel zugeführt und in Richtung zum vorderen Ende 5 der Welle 3 gefördert wird. Dort wird es dann in der üblichen Weise über nicht dargestellte Verteil-Kanäle zum Werkzeug 11 geleitet.

## Patentansprüche

1. Motorbetriebene Arbeits-Spindel für eine Werkzeug-Maschine,
- mit einem Gehäuse (2) mit einer Mittel-Längs-Achse (4),
- mit einer im Gehäuse (2) drehbar gelagerten Welle (3),
- mit einer an einem vorderen Ende (5) der Welle (3) angeordneten Aufnahme (9),
- mit einem mit der Welle (3) gekoppelten, im Gehäuse (2) angeordneten elektromotorischen Spindel-Dreh-Antrieb (14),
-- der einen Stator (15) und einen Rotor (18) aufweist,
--- wobei der die Welle (3) umgebende Stator (15) im Gehäuse (2) eingebaut ist und
--- wobei der Rotor (18) auf der Welle (3) befestigt ist,
**dadurch gekennzeichnet,**
- **dass** im Gehäuse (2) ein mit der Welle (3) gekoppelter Spindel-Vorschub-Antrieb (20) angeordnet ist und
- **dass** die Welle (3) in Richtung der Mittel-Längs-Achse (4) im Gehäuse (2) um einen Arbeitshub cₘₐₓ verschiebbar gelagert ist.

2. Arbeits-Spindel nach Anspruch 1, **dadurch gekennzeichnet,**
- **dass** der SpindeI-Vorschub-Antrieb (20) elektromotorisch mit einem im Gehäuse (2) befestigten Stator (21) und einem Rotor (22) gebildet ist,
- **dass** der Rotor (22) drehfest und in Richtung der Mittel-Längs-Achse (4) unverschiebbar auf einer Gewinde-Mutter (23) angeordnet ist und
- **dass** in der Gewinde-Mutter (23) eine Gewinde-Hülse (26) angeordnet ist, die axial unverschiebbar, aber frei drehbar auf der Welle (3) angeordnet ist.

3. Arbeits-Spindel nach Anspruch 2, **dadurch gekennzeichnet,**
**dass** der Spindel-Vorschub-Antrieb (20) als Torque-Motor ausgebildet ist.

4. Arbeits-Spindel nach Anspruch 1, **dadurch gekennzeichnet,**
- **dass** der Rotor (18) des Spindel-Dreh-Antriebs (14) ein Rotor-Blechpaket (19) mit einer Länge a in Richtung der Mittel-Längs-Achse (4) aufweist,
- **dass** der Stator (15) des Spindel-Dreh-Antriebs (14) ein Stator-Blechpaket (17) mit einer Länge b aufweist und
- **dass** gilt: a > b.

5. Arbeits-Spindel nach Anspruch 4, **dadurch gekennzeichnet,**
- **dass** gilt cₘₐₓ ≈ a - b.

6. Arbeits-Spindel nach Anspruch 1, **dadurch gekennzeichnet,**
- **dass** die Welle (3) mittels einer Schiebe-Hülse (8) im Gehäuse (2) gelagert ist.

7. Arbeits-Spindel nach Anspruch 1, **dadurch gekennzeichnet,**
- **dass** die Aufnahme (9) eine Spann-Einrichtung (10) aufweist, die mittels einer in der Welle verschiebbar gelagerten Zug-Stange (13) betätigbar ist.

8. Arbeits-Spindel nach Anspruch 7, **dadurch gekennzeichnet,**
**dass** zum Spannen der Spann-Einrichtung (10) eine Feder (44) vorgesehen ist, die zwischen der Welle (3) und der Zug-Stange (13) angeordnet ist.

9. Arbeits-Spindel nach Anspruch 7, **dadurch gekennzeichnet,**
- **dass** die Zug-Stange (13) gegen einen im Gehäuse (2) angeordneten Anschlag (45) in Richtung der Mittel-Längs-Achse (4) anlegbar ist und
- **dass** die Welle (3) mittels des Spindel-Vorschub-Antriebs (20) zum Lösen der Spann-Einrichtung (10) relativ gegenüber der Zug-Stange (13) verschiebbar ist.

10. Arbeits-Spindel nach Anspruch 1, **dadurch gekennzeichnet,**
**dass** eine Axiȧl-Vorschub-Mess-Einrichtung (31) vorgesehen ist.

11. Arbeits-Spindel nach Anspruch 1, **dadurch gekennzeichnet,**
**dass** eine Rotations-Mess-Einrichtung (35) vorgesehen ist.

## Claims

1. Motor-driven working spindle for a machine tool, the working spindle comprising
- a casing (2) with a central longitudinal axis (4);
- a shaft (3) which is mounted for rotation in the casing (2);
- a receptacle (9) arranged on a front end (5) of the shaft (3);
- an electromotive spindle rotary drive (14) which is coupled to the shaft (3) and is arranged in the casing (2), the spindle rotary drive (14) comprising
-- a stator (15) and a rotor (18),
-- wherein the stator (15) surrounding the shaft (3) is mounted in the casing (2); and
-- wherein the rotor (18) is fastened to the shaft (3);
**characterised in**
- **that** in the casing (2) is arranged a spindle feed drive (20) which is coupled to the shaft (3); and
- **that** the shaft (3) is mounted in the casing (2) for displacement by a working stroke cₘₐₓ in the direction of the central longitudinal axis (4).

2. Working spindle according to claim 1, **characterised in**
- **that** the spindle feed drive (20) is designed in the manner of an electric motor comprising a stator (21) mounted in the casing (2) and a rotor (22);
- **that** the rotor (22) is arranged on a threaded nut (23) in such a way as to be rotationally fixed and non-displaceable in the direction of the central longitudinal axis (4); and
- **that** in the threaded nut (23) is arranged a threaded sleeve (26) which is arranged on the shaft (3) in such a way as to be axially non-displaceable but freely rotatable.

3. Working spindle according to claim 2, **characterised in**
**that** the spindle feed drive (20) is designed as a torque motor.

4. Working spindle according to claim 1, **characterised in**
- **that** the rotor (18) of the spindle rotary drive (14) comprises a laminated rotor core (19) with a length a in the direction of the central longitudinal axis (4);
- **that** the stator (15) of the spindle rotary drive (14) comprises a laminated stator core (17) with a length b; and
- **that** a > b applies.

5. Working spindle according to claim 4, **characterised in**
- **that** Cₘₐₓ≈ a - b applies.

6. Working spindle according to claim 1, **characterised in**
- **that** the shaft (3) is mounted in the casing (2) by means of a sliding sleeve (8).

7. Working spindle according to claim 1, **characterised in**
- **that** the receptacle (9) comprises a clamping device (10) which is actuable by means of a tie rod (13) which is mounted for displacement in the shaft.

8. Working spindle according to claim 7, **characterised in**
**that** a spring (44) is provided for clamping the clamping device (10), the spring (44) being arranged between the shaft (3) and the tie rod (13).

9. Working spindle according to claim 7, **characterised in**
- **that** the tie rod (13) is seatable against a stop (45) arranged in the casing (2) in the direction of the central longitudinal axis (4); and
- **that** the shaft (3) is displaceable relative to the tie rod (13) by means of the spindle feed drive (20) for releasing the clamping device (10).

10. Working spindle according to claim 1, **characterised in**
**that** an axial feed measuring device (31) is provided.

11. Working spindle according to claim 1, **characterised in**
**that** a rotation measuring device (35) is provided.

## Revendications

1. Broche principale motorisée pour une machine-outil,
- avec un carter (2) avec un axe médian longitudinal (4)
- avec un arbre (3), monté rotatif dans le carter (2),
- avec un logement (9), agencé sur une extrémité avant (5) de l'arbre (3),
- avec un système électromotorisé d'entraînement en rotation (14) de la broche, couplé avec l'arbre (3), agencé dans le carter (2),
-- lequel système d'entraînement comporte un stator (15) et un rotor (18),
--- ledit stator (15), qui entoure l'arbre (3), étant intégré dans le carter (2), et
--- ledit rotor (18) étant fixé sur l'arbre (3),
**caractérisée**
- **en ce qu'**un système d'entraînement en avance (20) de la broche, couplé à l'arbre (3), est disposé dans le carter (2), et
- **en ce que** l'arbre (3) est monté dans le carter (2) de manière mobile en translation sur une course de travail cₘₐₓ dans la direction de l'axe médian longitudinal (4).

2. Broche principale selon la revendication 1,
**caractérisée**
- **en ce que** le système d'entraînement en avance (20) de la broche est conçu sous forme électromotorisée avec un stator (21), fixé dans le carter (2), et un rotor (22),
- **en ce que** ledit rotor (22) est monté solidaire en rotation sur un écrou fileté (23) et immobile en translation dans la direction de l'axe médian longitudinal (4), et
- **en ce que** dans l'écrou fileté (23) est agencé un manchon fileté (26), qui est agencé sur l'arbre (3) de manière immobile en translation dans la direction axiale, mais librement rotative.

3. Broche principale selon la revendication 2,
**caractérisée**
- **en ce que** le système d'entraînement en avance (20) de la broche est réalisé sous la forme d'un moteur couple.

4. Broche principale selon la revendication 1,
**caractérisée**
- **en ce que** le rotor (18) du système d'entraînement en rotation (14) de la broche comporte un empilage de tôles (19) formant le rotor avec une longueur a dans la direction de l'axe médian longitudinal (4),
- **en ce que** le stator (15) du système d'entraînement en rotation (14) de la broche comporte un empilage de tôles (17) formant le stator avec une longueur b, et
- **en ce que** a > b.

5. Broche principale selon la revendication 4,
**caractérisée**
- **en ce que** cₘₐₓ ≈ a - b.

6. Broche principale selon la revendication 1,
**caractérisée**
- **en ce que** l'arbre (3) est monté dans le carter (2) au moyen d'une gaine coulissante (8).

7. Broche principale selon la revendication 1,
**caractérisée**
- **en ce que** le logement (9) comporte un dispositif de serrage (10), qui peut être actionné par une tige de traction (13) montée mobile en translation dans l'arbre.

8. Broche principale selon la revendication 7,
**caractérisée**
- **en ce que** pour le serrage du dispositif de serrage (10), il est prévu un ressort (44), qui est agencé entre l'arbre (3) et la tige de traction (13).

9. Broche principale selon la revendication 7,
**caractérisée**
- **en ce que** la tige de traction (13) peut être amenée dans la direction de l'axe médian longitudinal (4) en contact contre une butée (45) qui est agencée dans le carter (2), et
- **en ce que** l'arbre (3) peut être déplacé en translation par rapport à la tige de traction (13) au moyen du système d'entraînement en avance (20) de la broche en vue du desserrage du dispositif de serrage (10).

10. Broche principale selon la revendication 1,
**caractérisée**
- **en ce qu'**il est prévu un dispositif de mesure de l'avance axiale (31).

11. Broche principale selon la revendication 1,
**caractérisée**
- **en ce qu'**il est prévu un dispositif de mesure de la rotation (35).
